(19) Europäisches Patentamt
European Patent Office
Office européen des brevets

(11) **EP 2 182 458 A1**

(12) **EUROPEAN PATENT APPLICATION**

(43) Date of publication:
**05.05.2010 Bulletin 2010/18**

(51) Int Cl.:
***G06F 21/00*** *(2006.01)*

(21) Application number: **09012448.8**

(22) Date of filing: **01.10.2009**

| | |
|---|---|
| (84) Designated Contracting States:<br>**AT BE BG CH CY CZ DE DK EE ES FI FR GB GR HR HU IE IS IT LI LT LU LV MC MK MT NL NO PL PT RO SE SI SK SM TR**<br>Designated Extension States:<br>**AL BA RS**<br><br>(30) Priority: **03.11.2008 IL 19508108**<br><br>(71) Applicant: **Deutsche Telekom AG**<br>**53113 Bonn (DE)** | (72) Inventor: **Moskovitch, Robert**<br>**78741 Ashkelon (IL)**<br><br>(74) Representative: **Flaccus, Rolf-Dieter**<br>**Flaccus · Müller-Wolff**<br>**Patentanwälte**<br>**Bussardweg 10**<br>**50389 Wesseling (DE)** |

(54) **Acquisition of malicious code using active learning**

(57)    A method for efficiently detecting unknown malicious code, according to which a Data Set that is a collection of files that includes a first subset with malicious code and a second subset with benign code files is created and malicious and benign files are identified by an antivirus program. All files are parsed using n-gram moving windows of several lengths. The TF representation is computed for each n-gram in each file and an initial set of top features of all n-grams is selected, based on the DF measure. The number of the top features is reduced to comply with the computation resources required for classifier training, by using features selection methods. The optimal number of features is determined, based on the evaluation of the detection accuracy of several sets of reduced top features and a dataset with a distribution of benign files is greater than the distribution of and malicious files is prepared, where a portion of the dataset is used for training the classifier. New malicious codes within a stream of new files are automatically detected and acquired by using Active Learning.

Fig. 2

EP 2 182 458 A1

**Description**

**Field of the Invention**

The present invention relates to the field of Information Systems Security. More particularly, it relates to a method for allowing acquisition of unknown MalCode (Malicious Code) using Active Learning in order to define them status (malicious or benign files).

**Background of the Invention**

Definitions:

- Active Learning: Approach used when data are unlabeled. In this situation, the "learning algorithm" can actively ask the user labeling data. "Active Learning" is a supervised learning approach. To overcome the limits of the classical supervised learning for which the user chooses all the learning examples, an active learning algorithm submits to the user, data for labeling according to the previous labeled data. The Active Learning approach proposes a method which asks actively for labeling of specific examples, based on their potential contribution to the learning process. Active Learning is roughly divided into two major approaches: the membership queries, (as defines in "Queries and concept learning", Angluin, D., 1988. Machine Learning, 2, 319-342.) and the selective-sampling approach (as defines in "A sequential algorithm for training text classifiers", Lewis, D. and Gale, W., 1994. In Proceedings of the Seventeenth Annual International ACM-SIGIR Conference on Research and Development in Information Retrieval, pages 3-12. Springer-Verlag.). In the membership queries approach the learner constructs artificial examples from the problem space, then asks for its label from the expert, and finally learns from it and so forth, in an attempt to cover the problem space and to have a minimal number of examples that represent most of the types among the existing examples. However, a potential practical problem in this approach is requesting a label for a nonsense example. The selective-sampling approach usually comprises a pool-based sampling, in which the learner is given a large set of unlabeled data from which it iteratively selects the most informative and contributive examples for labeling and learning, based on which it is carefully selects the next examples, until it meets stopping criteria.
- Backdoor (or trapdoor): A way for allowing access to IT system (program, online service or an entire system). These codes are written by the programmer who creates a program code or can be injected in the code by a malcode programmer.
- Behavior blocker: System which attempts to detect sequences of events in operating systems.
- Binary code: Codes consisting of logical zeros and ones.
- Binary file: Computer file which may contain any type of data, encoded in binary form for computer storage and processing purposes.
- Boosting: ML meta-algorithm for performing supervised learning.
- Categorization: Process, in which entities are identified, differentiated and classified. Categorization implies that objects are grouped into categories, usually for some specific purpose.
- Class: a collection of objects that can be unambiguously defined by one or more properties that all its members share.
- Classifier: A rule set which is learnt from a given *training-set,* including examples of classes. Related to the present invention these classes are both malicious and benign files.
- Data Mining (DM): It has been described as "the nontrivial extraction of implicit, previously unknown, and potentially useful information from data" in "Knowledge Discovery in Databases - An Overview", by Frawley W., Piatetsky-Shapiro G., and Matheus C., in Knowledge Discovery in Databases, 1991*,* and "the science of extracting useful information from large data sets or databases" in "Principles of Data Mining" by Hand D., Mannila H., and Smyth P., MIT Press, Cambridge, MA, 2001.
- Decision Trees (DT): Well established family of learning algorithms as shown in "C4.5: programs for machine learning" by Quinlan, J.R., Morgan Kaufmann Publishers, 1993. Classifiers are represented as trees whose internal nodes are tests of individual features and whose leaves are classification decisions (classes). Typically, a greedy heuristic search method is used to find a small decision tree, which is induced from the data set by splitting the variables based on the expected information gain. This method correctly classifies the training data. Modern implementations include pruning, which avoids the problem of over fitting. One of the well known algorithms from this family is the C4.5 algorithm and another implementation of it called J48 (*"*Data Mining: Practical Machine Learning Tools and Techniques", Witten, I. H. and Frank, E., Elsevier, 2005). An important characteristic of decision trees is the explicit form of their knowledge, which can be easily represented as rules.
- Feature Extraction (FE): A special form of dimensionality reduction based on the transformation of an input dataset into a set of features.

- File: A collection of data or information called by a filename. It can contain textual, numerical, graphical, audio and video data. Many of them can by executable files (or can contain executable code).
- Benign file: File which did not contain malcode

  o Malcode file: File which contain at least a part of malcode.

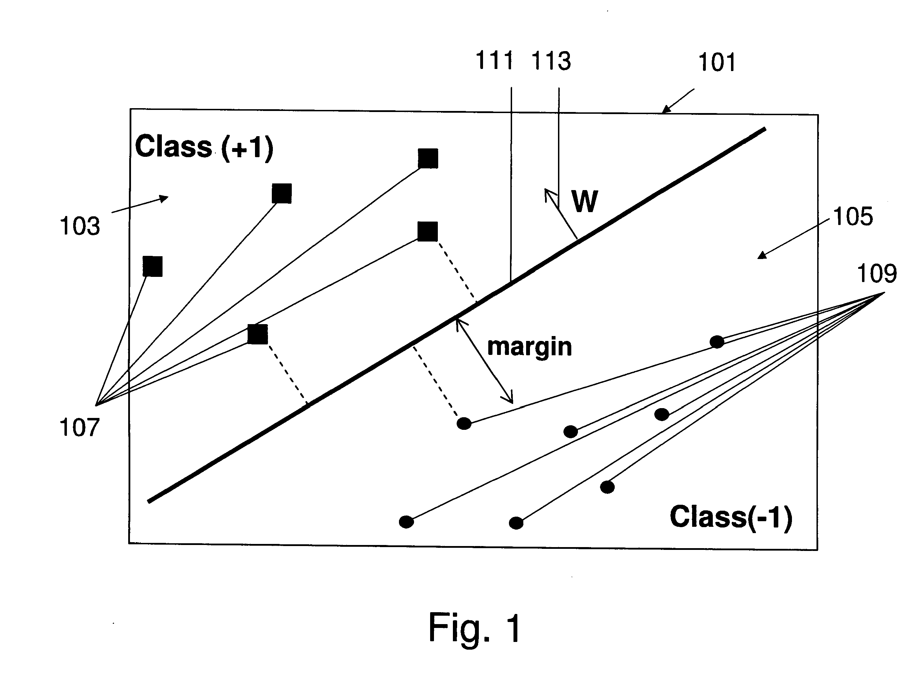

- Heuristic-Based methods: Methods which are based on rules defined by experts, which define a behavior in order to enable the detection them. ("Scanners of the Year 2000: Heuristics", Gryaznov, D., Proceedings of the 5th International Virus Bulletin, 1999.)
- Imbalance problem: In ML, problem which can appear in the learning process when a class is represented by a large number of examples while the other is represented by only a few.
- Information Retrieval (IR): Science of information searching. This informatiom can be a full document or a part of. A document in this field it is any element which contian data. A computer file is here a document.
- Integrity checkers: System which periodically check for changes in files and disks.
- Network Services (and Internet Network Services): "Softwares" which provide to a client computer services (such as webmail) or shared ressources (such as data sharing).
- K-Nearest-Neighbor (KNN): An ML algorithm. It classifies an object acoording to a majority vote of its neighbors. An object is assigned to the class most common amongst its k nearest neighbors.
- Machine learning (ML): Subfield of Artificial Intelligence and it rellated to the design and the development of algorithms and techniques allowing computers to "learn".
- Malcode (Malicious Code): commonly refers to pieces of code, not necessarily executable files, which are intended to harm, generally or in particular, the specific owner of the host. Malcodes are classified, mainly based on their transport mechanism, into five main categories: *worms, viruses, Trojans* and new group that is becoming more common, which is comprised of *remote access Trojans* and *backdoors.*
- Naive Bayes (NB) classifier: It is based on the *Bayes theorem,* which in the context of classification states that the posterior probability of a class is proportional to its prior probability, as well as to the conditional likelihood of the features, given this class. If no independent assumptions are made, a Bayesian algorithm must estimate conditional probabilities for an exponential number of feature combinations. NB simplifies this process by assuming that features are *conditionally independent,* given the class, and requires that only a linear number of parameters be estimated. The prior probability of each class and the probability of each feature, given each class is easily estimated from the training data and used to determine the posterior probability of each class, given a set of features. Empirically, NB has been shown to accurately classify data across a variety of problem domains ("On the optimality of simple Bayesian classifier under zero-one loss", Domingos P. and Pazzani M., Machine Learning, Vol. 29, 1997).
- n-gram: Sub-sequence of n items from a given sequence.
- Network: Defines a system which provides access paths for communication between users. Communication networks may be designed for data, voice and video. They may be private with a limited access or public with an open access.
- Signature-Based methods: Methods, which rely on the identification of unique strings in the code; while being very precise, it is useless against unknown malicious code.
- Spyware: Any software application that, without the user's knowledge, collects information about the system it resides on and reports that information back to a third party. Like a virus it can be loaded onto a computer without user.
- Support Vector Machine (SVM): Figure 1 illustrates a two dimensional space 101, in which the examples 107-109 are located according to their features and the hyperplane splits 111 them according to their label (classes {-1;1}). SVM is a classifier which finds a linear hyperplane 111 that separates the given examples 107-109 into at least two classes 103-105; it is initially a binary classifier. An extension that enables handling multiclass classification was developed. SVM is known for its capacity to handle a large amount of features, such as text as was shown by "Making large-scale support vector machine learning practical", Joachims, T., 1998, Advances in Kernel Methods: Support Vector Machines. MIT Press, Cambridge, MA.. Given a training set 101, in which an example (such as 107 or 109) is a vector $x_i = <f_i, f_2...f_m>$, where $f_{i'}$ is a feature, and labeled by $y_i = \{-1,+1\}$, the SVM attempts to specify a linear hyperplane 111 that has the maximal margin 113, defined by the maximal (perpendicular) distance between the examples of the two classes. The examples lying closest to the hyperplane 111 are the "supporting vectors" W 113, the Normal of the hyperplane 111, is a linear combination 111 of the most important examples 107-109 (supporting vectors), multiplied by $\alpha$ (LaGrange multipliers). Since the dataset in the original space often cannot be linearly separated, a kernel function K is used. SVM actually projects the examples into a higher dimensional space in order to create linear separation of the examples. Note that when the kernel function satisfies Mercer's condition, as was explained by "A tutorial on support vector machines for pattern recognition". Burges, CJC. (1988), Data Mining and Knowledge Discovery, 2:121-167, K can be written as shown in Equation 1, where $\Phi$ is a function that maps the example from the original feature space into a higher dimensional space, while K relies on "inner product" between the mappings of examples $x_1$, $x_2$. For the general case, the SVM classifier will be in the form shown in Equation 2, while n is the number of examples in training set, and w is defined in Equation 3.

$$K(\mathbf{x}_1, \mathbf{x}_2) = \Phi(\mathbf{x}_1) \cdot \Phi(\mathbf{x}_2) \qquad (1)$$

$$f(x) = sign(w \cdot \Phi(x)) = sign\left(\sum_1^n \alpha_i y_i K(x_i, x)\right) \qquad (2)$$

$$w = \sum_1^n \alpha_i y_i \Phi(x_i) \qquad (3)$$

Two commonly used kernel functions were used: Polynomial kernel, as shown in Equation 4, creates polynomial values of degree p, where the output depends on the direction of the two vectors, examples $x_1$, $x_2$, in the original problem space. Note that a private case of a polynomial kernel, having p=1 is actually the Linear kernel. Radial Basis Function (RBF), as shown in Equation 5, in which a Gaussian is used as the RBF and the output of the kernel, depends on the Euclidean distance of examples $x_1$, $x_2$

$$K(\mathbf{x}_1, \mathbf{x}_2) = (\mathbf{x}_1 \cdot \mathbf{x}_2 + 1)^P \qquad (4)$$

$$K(\mathbf{x}_1, \mathbf{x}_2) = \exp(-\frac{\|\mathbf{x}_1 - \mathbf{x}_2\|^2}{2\sigma^2}) \qquad (5)$$

- Test Set: Data set used to test the quality of a classification algorithm.
- Training Set: Data set used to allow to a classification algorithm to identify classes.
- Text Categorization: Classification of documents into a predefined number of categories. Each document can be in zero, one or more category. Using ML, the objective is to learn classifiers which perform the category assignments automatically.
- Trojan Horse (Trojan): A destructive program which is presented as a benign file. They do not replicate themselves like the viruses.
- Virus: A program or piece of code that is loaded onto a computer without user knowledge and runs against user wishes. It can replicate it selves. A virus is not always destructive but can disturb the computer work using up the computer's resources.
- Worm: A program that replicates itself over a computer network and usually performs malicious actions, such as using up the computer's resources.

The recent growth in high-speed Internet connections and in Internet network services has led to an increase in the creation of new malicious codes for various purposes, based on economic, political, criminal or terrorist motives (among others). Some of these codes have been used to gather information, such as passwords and credit card numbers, as well as behavior monitoring. Current antivirus and antispywares technologies are primarily based on two approaches: *signature-based* and *heuristic.* Other proposed methods include *behavior blockers and integrity checkers.* However, besides the fact that these methods can be bypassed by viruses or spywares, their main drawback is that, by definition, they can only detect the presence of a malcode after the infected program has been executed, unlike the signature-based methods, including the heuristic- based methods, which are very time-consuming and have a relatively high false alarm rate. Therefore, generalizing the detection methods to be able to detect unknown malcodes is crucial.

In the previous approaches, classification algorithms were employed to automate and extend the idea of heuristic-based methods. The binary code of a file is represented by n-grams and classifiers are applied to learn patterns in the code and classify large amounts of data. Studies have shown that this is a very successful strategy. However, these ones present evaluations based on test collections, having similar proportion of malicious versus benign files in the training set and test collections (50% of malicious files). This has two potential failures. These conditions do not reflect real life situation, in which malicious code is commonly significantly less than 50% and additionally these conditions might report optimistic results.

Recent survey made by McAfee (McAfee Study Finds 4 Percent of Search Results Malicious, by Lane, F., June 4, 2007: [http:llwww.newsfactor.com/story.xhtml?story_id=010000CEUEQO]) indicates that about 4% of search results from the major search engines on the web contain malicious code. Additionally, Shin (Shin, J., and Jung, H. Balakrishnan, Malware Prevalence in the KaZaA File-Sharing Network, Internet Measurement Conference (IMC), Brazil, October 2006) found that above 15% of the files in a Peer-to-Peer network contained malicious code. According to these data, the proportion of malicious files in real life is about or less than 10%.

Over the last years, several studies have investigated the direction of detecting unknown malcode based on its binary code. "Data mining methods for detection of new malicious Executables", Shultz et al., Proceedings of the IEEE Symposium on Security and Privacy, 2001, were the first to introduce the idea of applying ML and DM methods for the detection of different malcodes based on their respective binary codes. They used three different FE approaches: *program header, string features* and *byte sequence features,* in which they applied four classifiers: a *signature-based method* (an antivirus one), *Ripper* - a rule-based learner, *NB* and *Multi-Naïve Bayes.* This study found that all of the ML methods were more accurate than the signature-based algorithm. The ML methods were more than twice as accurate when the out-performing method was Naive Bayes, using strings, or Multi-NB using byte sequences. "N-gram Based Detection of New Malicious Code", Abou-Assaleh, T., Cercone, N., Keselj, V., and Sweidan, R., 2004, in Proceedings of the 28th Annual International Computer Software and Applications Conference (COMPSAC'04*), introduced a framework that used the common n-gram (CNG) method and the KNN classifier for the detection of malcodes. For each class, malicious and benign, a representative profile has been constructed and assigned a new executable file. This executable file has been compared with the profiles and matched to the most similar. Two different data sets were used: the *I-worm collection,* which consisted of 292 Windows internet worms and the *win32 collection,* which consisted of 493 Windows viruses. The best results were achieved by using 3 to 6 n-grams and a profile of 500 to 5000 features.

"Learning to detect malicious executables in the wild", Kolter, J.Z. and Maloof, M.A., 2004, in Proceedings of the Tenth ACM SIGKDD International Conference on Knowledge Discovery and Data Mining, 470-478. New York, NY: ACM Press, presented a collection that included 1971 benign and 1651 malicious executables files. n-grams were extracted and 500 were selected using the *Information Gain* measure ("Machine Learning", Mitchell T.,1997, McGraw-Hill). The vector of n-gram features was binary, presenting the presence or absence of a feature in the file and ignoring the frequency of feature appearances. In their experiment, they trained several classifiers: IBK (a KNN classifier one), a similarity based classifier called TFIDF classifier, NB, SMO (a SVM classifier one) and J48 (a Decision Tree). The last three of these were also boosted. Two main experiments were conducted on two different data sets, a small collection and a large collection. The small collection included 476 malicious and 561 benign executables and the larger collection included 1651 malicious and 1971 benign executables. In both experiments, the four best performing classifiers were Boosted J48, SVM, Boosted SVM and IBK. Boosted J48 out-performed the others. The authors indicated that the results of their n-gram study were better than those presented by Shultz et al.

Recently, "Learning to Detect and Classify Malicious Executables in the Wild", Kolter J., and Maloof M., Journal of Machine Learning Research, Vol. 7, 2006, reported an extension of their work, in which they classified malcodes into classes based on the functions in their respective payloads. In the categorization task of multiple classifications, the best results were achieved for the classes' *mass mailer, backdoor* and *virus* (no benign classes). In attempts to estimate the ability to detect malicious codes based on their issue dates, these techniques were trained on files issued before July 2003, and then tested on 291 files issued from that point in time through August 2004. The results were, as expected, lower than those of previous experiments. Those results indicate the importance of maintaining such a training set through the acquisition of new executables, in order to cope with unknown new executables.

"A Feature Selection and Evaluation Scheme for Computer Virus Detection", Henchiri, O., and Japkowicz, N., Proceedings of ICDM-2006, 2006, presented a hierarchical feature selection approach which enables the selection of n-gram features that appear at rates above a specified threshold in a specific virus family, as well as in more than a minimal amount of virus classes (families). They applied several classifiers: ID3 (a Decision Tree), J48, NB, SVM and SMO to the data set used by Shultz et al. and obtained results that were better than those obtained through traditional feature selection, as presented in "Data mining methods for detection of new malicious executables", Schultz, M., Eskin, E., Zadok, E., and Stolfo, S. (2001), in Proceedings of the IEEE Symposium on Security and Privacy, 2001, pp. 178-184, which mainly focused on 5-grams. However, it is not clear whether these results are more reflective of the feature selection method or the number of features that were used.

"Unknown Malcode Detection via Text Categorization and the Imbalance Problem", Moskovitch, R., Stopel, D., Feher, C., Nissim, N., and Elovici, Y., 2008 IEEE Intelligence and Security Informatics, Taiwan 2008, presented a test collection consisting of more than 30,000 executable files, which is the largest known to us. They performed a wide evaluation consisting of five types of classifiers and focused on the imbalance problem in real life conditions, in which the percentage of malicious files is less than 10%, based on recent surveys. After evaluating the classifiers on varying percentages of malicious files in the training set and test sets, it was shown to achieve the optimal results when having similar proportions in the training set as expected in the test set.

A major challenge in supervised learning is labeling the examples in the dataset. Often the labeling is expensive since it is done manually by human experts. Labeled examples are crucial in order to train a classifier, and we would therefore like to reduce the number of labeling requirements. This is possible to overcome this kind of problem using Active Learning.

Studies in several domains successfully applied active learning in order to reduce the effort of labeling examples. Unlike in random learning, in which a classifier is trained on a pool of labeled examples, the classifier actively indicates the specific examples that should be labeled, which are commonly the most informative examples for the training task. Two high performance ACTIVE LEARNING methods were considered in our experiments: Simple-Margin (as defines in "Support vector machine active learning with applications to text classification", Tong, S. and Koller, D., 2000, Journal of Machine Learning Research, 2:45-66, 2000-2001) and Error-Reduction (as defines in "Toward Optimal Active Learning through Sampling Estimation of Error Reduction", Roy, N. and McCallum, A., 2001, ICML 2001).

As we presented briefly earlier the option of acquiring new malicious files from the web and internet services providers is essential for fast detection and updating of the anti-viruses, as well as updating of the classifiers. However, manually inspecting each potentially malicious file is time-consuming, and often done by human experts. We propose using Active Learning as a selective sampling approach based on a static analysis of malicious code, in which the active learner identifies new examples which are expected to be unknown. Moreover, the active learner is expected to present a ranked list of the most informative examples, which are probably the most different from what currently is known.

"A vector space model for automatic indexing", Salton, G., et al., Communications of the ACM, Vol. 18, 1975, presented the *vector space model* to represent a textual file as a *bag of words.* After parsing the text and extracting the words, a vocabulary, of the entire collection of words is constructed. Each of these words may appear zero to multiple times in a document. A vector of terms is created, such that each index in the vector represents the term frequency (TF) in the document. Equation 6 shows the definition of a normalized TF, in which the term frequency is divided by the maximal appearing term in the document with values in the range of [0; 1].

Another common representation is the TF Inverse Document Frequency (TFIDF), which combines the frequency of a term in the document (TF) and its frequency in the documents collection, as shown in Equation 7, in which the term's (normalized) TF value is multiplied by the IDF = log (N/n), where N is the number of documents in the entire file collection and n is the number of documents in which the term appears.

$$TF = \frac{term\_frequency}{\max(term\_frequency\_in\_document)} \qquad (6)$$

$$TFIDF = TF \times \log(DF), \qquad (7)$$

where

$$DF = \frac{N}{n}$$

It is therefore an object to the present invention to provide a method for increasing the unknown malcode discovery and detection ratio.

It is another object to the present invention to provide a method based on IR concepts and text categorization.

It is still an object of the present invention to provide efficient malcode detection using the SVM algorithm approach.

It is yet an object of the present invention to enable to provide efficient malcode detection with low levels of false alarms.

It is still another object of the present invention to provide a method wherein Active Learning is used to detect malicious files from a stream of many new files.

Further purposes and advantages of this invention will appear as the description proceeds.

### Summary of the Invention

The present invention is directed to a method for efficiently detecting unknown malicious code. A Data Set being a collection of files that includes a first subset with malicious code and a second subset with benign code files is created and malicious and benign files are identified by an antivirus program. All files are parsed using n-gram moving windows of several lengths. The TF representation is computed for each n-gram in each file and an initial set of top features of all n-grams is selected, based on the DF measure. The number of the top features is reduced to comply with the computation resources required for classifier training, by using features selection methods. The optimal number of features is determined based on the evaluation of the detection accuracy of several sets of reduced top features and a dataset with a distribution of benign files is greater than the distribution of and malicious files is prepared, where a portion of the dataset is used for training the classifier. New malicious codes within a stream of new files are automatically detected and acquired by using Active Learning.

Optionally, for each classifier with a specific type of kernel, the classification accuracy is evaluated according using the simple-margin acquisition method for the active learning step and the previous results are improved using error-reduction algorithms to evaluate acquisition performance. The optimal kernel is selected, to be used with the classifier, to thereby obtain results with the highest detection accuracy, wherein the remaining portion of the dataset is used as a test set.

The distribution of benign and files malicious files may equal to 90%-10%, respectively.

The malicious code is a malicious executable. The classifier may be an SVM classifier.

The remaining portion of the data set may be used as a test set.

All the above and other characteristics and advantages of the invention will be further understood through the following illustrative and non-limitative description of preferred embodiments thereof, with reference to the appended drawings; wherein like components are designated by the same reference numerals.

### Brief Description of the Drawings

The above and other characteristics and advantages of the invention will be better understood through the following illustrative and non-limitative detailed description of preferred embodiments thereof, with reference to the appended drawings, wherein:

- Fig. 1. schematically illustrates an SVM that separates a set into two classes, having maximal margin in a two dimensional space;
- Fig. 2 schematically illustrates the process for malicious code detection for the present invention;
- Fig. 3 schematically illustrates the evaluation scheme ;
- Fig. 4 graphically illustrates the results of a global selection, term representation, and n-grams; and
- Fig.5 graphically illustrates the accuracy increased as more features were used.

### Detailed Description of Preferred Embodiments

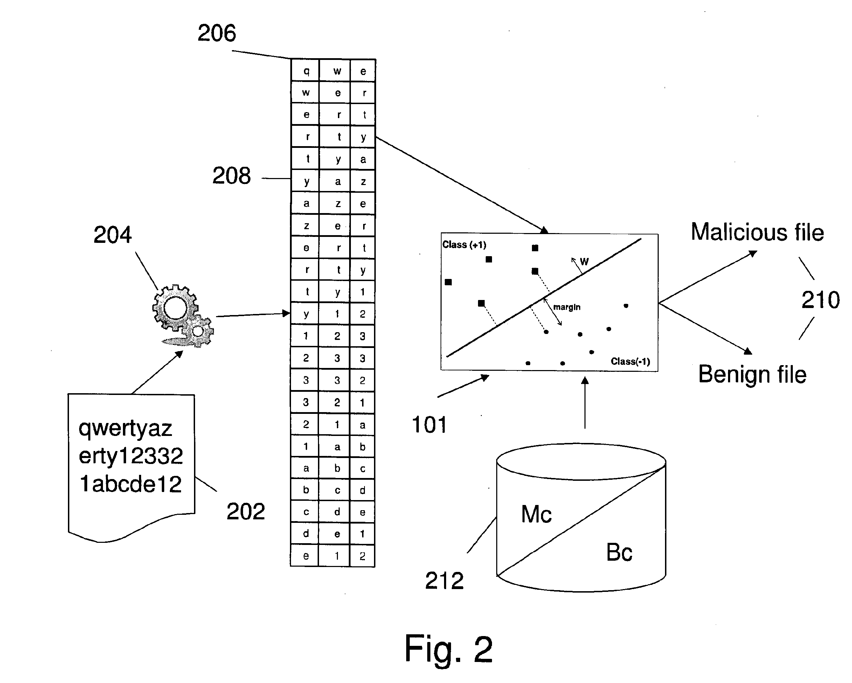

According to an embodiment of the present invention, Fig. 2 schematically describes the process for detecting the type of the code (benign or malicious) of a file. A file 202 which can be anywhere on a network e.g.: router, computer, and which while being check and parsed 204 to generate a set of n-grams 206. Each n-gram (for example 208) is submitted to an classifier algorithm 101, which can be as an example an SVM classifier, defining according to a prior learning of n-grams describing malicious code (MC) and benign code (BC) from a set of learning files 212. The answer 210 of the classifier is "Malicious code" (M) or "Benign code" (B) for the n-gram or a set of n-grams. If at least one n-gram is detected as MC the file is considered as a malicious file.

### Data Set Creation

According to another embodiment of the present invention, a data set of malicious and benign executables, as an example for the Microsoft Windows operating system, is build, as this is the system most commonly used and most commonly attacked. This collection is assumed to be large. The malicious files are downloaded, as an example, from the VX Heaven website (*http:llvx.netlux.org*). After removing obfuscated and compressed files, 7690 malicious files are considered. Table 1 shows the distribution of the benign codes and the malicious codes which are included in the global set (including files which are used is the training set and in the test set). Each main class of malcodes is represented significantly by at last few hundreds of files like it is detailed in Table 2.

According to yet another embodiment of the present invention, to identify the files, as an example, the Kaspersky anti-virus and the Windows version of the Unix 'file' command are used for file type identification. The files in the benign set, including executable and DLL (Dynamic Linked Library) files, are gathered from machines running Microsoft Windows XP operating system, which is considered currently like one of the most used. The benign set contained 22,735 files. The Kaspersky anti-virus program (*http:llwww.kaspersky.com*) has been used to verify that these files were completely virus-free. The addition of the malicious code set and the benign code set constituted very large files set.

**Table 1: Distribution of the main classes of malicious code in set**

| Main Class | Quantity |
|---|---|
| Worm | 787 |
| Trojan | 4792 |
| Virus | 1229 |
| Malware | 882 |

**Table 2: Distribution of the classes of malicious code in set**

| Class | Quantity |
|---|---|
| Badjoke | 51 |
| Constructor | 152 |
| DenialOfService | 75 |
| Email-Flooder | 104 |
| Email-Worm | 563 |
| Exploit | 52 |
| Flooder | 97 |
| Trojan | 768 |
| Virus | 1229 |
| Hacktool | 57 |
| Hoax | 2 |
| IM-Flooder | 43 |
| IM-Worm | 6 |
| IRC-Worm | 67 |
| Net-Worm | 28 |
| Nuker | 99 |
| P2P-Worm | 122 |
| SMS-Flooder | 33 |
| Sniffer | 5 |
| Spoofer | 5 |
| Trojan-AOL | 74 |
| Trojan-Backdoor | 2524 |

(continued)

| Class | Quantity |
|---|---|
| Trojan-Clicker | 31 |
| Trojan-Distributeddos | 23 |
| Trojan-Downloader | 171 |
| Trojan-Dropper | 207 |
| Trojan-IM | 24 |
| Trojan-Notifier | 30 |
| Trojan-PROXY | 14 |
| Trojan-PSW | 716 |
| Trojan-Spy | 210 |
| Virtool | 107 |
| Worm | 1 |

## Data Preparation and Feature Selection

According to still another embodiment of the present embodiment, the files (both benign and malicious) are parsed using several *n-gram* lengths moving windows, denoted by n Vocabularies of 16,777,216, 1,084,793,035, 1,575,804,954 and 1,936,342,220, for 3-gram, 4-gram, 5-gram and 6-gram, respectively, are extracted. After TF and TFIDF representation were calculated for each n-gram in each file. In ML applications, the large number of features (many of which do not contribute to the accuracy and may even decrease it) in many domains presents a complex problem. Moreover, in the current invention problem, the reduction of the amount of features is crucial, but must be performed while simultaneously maintaining a high level of accuracy. This is due to the fact that, as shown earlier, the vocabulary size may exceed billions of features, far more than can be processed by any feature selection tool within a reasonable period of time. Additionally, it is important to identify those terms that appear in most of the files, in order to avoid zeroed representation vectors. Thus, the top features based on the DF measure (Equation 7) were extracted and the features which appear in most of the files (those with high DF scores) are selected according the approach introduced in the next lines. Based on the DF measure, two sets are selected, the top 5,500 terms and the top 1,000 to 6,500 terms. Later, three feature selection methods are applied to each of these two sets. A *filters* approach is used, according to which, the measure is independent of any classification algorithm to compare the performances of the different classification algorithms. In a *filters approach,* a measure is used to quantify the correlation of each feature to the class (malicious or benign) and estimate its expected contribution to the classification task. As a baseline, the document frequency measure *DF* (Equation 2), *Gain Ratio (GR)* defines in "Machine Learning", Mitchell T., 1997, McGraw-Hill. and *Fisher Score (FS)* defines in "Molecular classification of cancer: Class discovery and class prediction by gene expression monitoring", Glob, T., Slonim, D., Tamaya, P., Huard, C., Gaasenbeek, M., Mesirov, J., Coller, H., Loh, M., Downing, J., Caligiuri, M., Bloomfield, C., and E. Lander, E., 1999, Science, 286:531-537, are used and allow selecting the top 50, 100, 200 and 300 results from each feature selection.

According to still one another embodiment of the present invention, for evaluation purposes some values are computed like the *True Positive Rate (TPR)* measure, which is the number of *positive* instances classified correctly, as shown in Equation 8, *False Positive Rate (FPR),* which is the number of *negative* instances misclassified (Equation 9), and the *Total Accuracy,* which measures the number of absolutely correctly classified instances, either positive or negative, divided by the entire number of instances shown in Equation 10.

$$TPR = \frac{|TP|}{|TP| + |FN|} \qquad (8)$$

$$FPR = \frac{|FP|}{|FP| + |TN|} \qquad (9)$$

$$TotalAccurancy = \frac{|TP| + |TN|}{|TP| + |FP| + |TN| + |FN|} \qquad (10)$$

## Evaluation of Active Learning in use

Active Learning is classically used in order to improve classifier accuracy by asking user for labeling examples. Nevertheless, according to a further embodiment of the present invention, Active Learning is used in order to detect automatically new and unknown files, which can be malicious files, from a stream of many files.

According to still a further embodiment of the present invention, to evaluate the use of Active Learning in the task of efficient acquisition of new files, specific measures derived from the experiments objectives were defined. The first objective is to determine the optimal settings of the term representation (TF or TFIDF), n-grams representation (3, 4, 5 or 6), the best global range (top 5500 or top 1000-6500) and feature selection method (DF, FS or GR), and the top selection (50, 100, 200, 300, 1000, 1500 or 2000).

## Evaluation Measures for the Acquisition Process

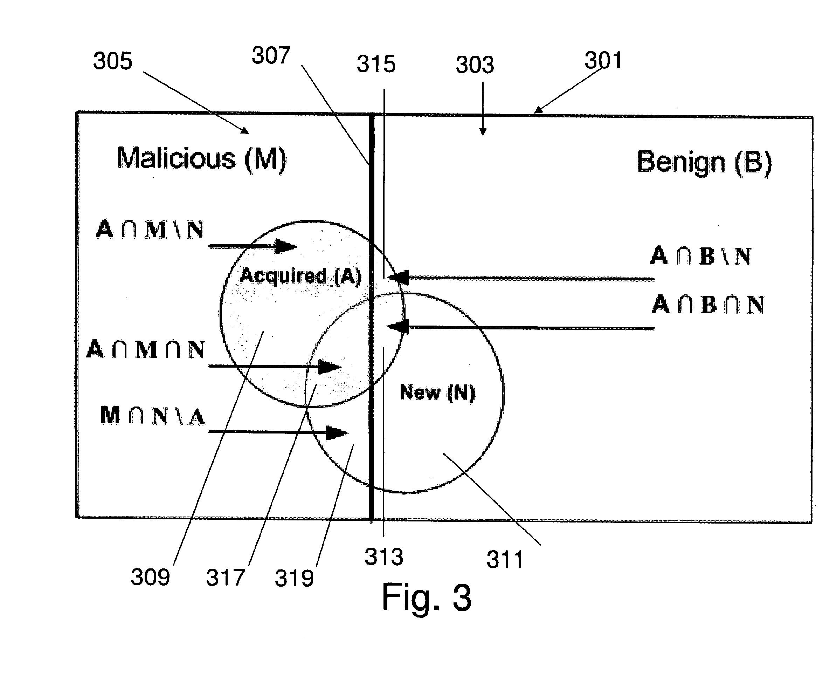

According to a further embodiment of the present invention, the acquisition performance of the Active Learner from a stream of files presented by the test set, containing benign and malicious executables, including *new* (unknown) and *not-new* files is evaluated. More particularly, the task is to evaluate the capability of the module to acquire the new files in the test set. Figure 3 illustrates the evaluation scheme describing the varying contents of the test set and *Acquisition set.* The dataset 301 contains two types of files: Benign (B) 303 and Malicious (M) 305. These datasets contain varying files partially known (Acquired (A)) 309 to the classifier, from the training set, and a larger portion of New (N) files 311, which are expected to be acquired by the Active Learner, illustrated by a circle. The active learner acquires from the stream part of the files, illustrated by the Acquired (A) circle 309. Ideally the Acquired circle (A) 309 is identical to the New circle (N) 311.

To define the evaluation measures, the resultant regions are defined in the evaluation scheme 301 by:

- $A \cap M \setminus N$    the Malicious files Acquired, but not New 309;
- $A \cap M \cap N$    the Malicious files Acquired and New 317;
- $M \cap N \setminus A$    the New Malicious files, but not Acquired 319;
- $A \cap B \setminus N$    the Benign files Acquired, but not New 315;
- $A \cap B \cap N$    the Benign files Acquired and New 313.

For the evaluation of the said scheme the known *Precision* and *Recall* measures are used, which are often used in IR and text categorization. The traditional precision and recall measures are firstly define. Equation 13 represents the Precision, which is the proportion of the accurately classified examples among the classified examples. Equation 14 represents the Recall measure, which is the proportion of the classified examples from a specific class in the entire class examples.

$$precision = \frac{|\{relevant\ examples\} \cap \{classiifed\ examples\}|}{|\{classified\ examples\}|} \qquad (13)$$

$$recall = \frac{|\{relevant\ examples\} \cap \{classified\ documents\}|}{|\{relevant\ examples\}|} \quad (14)$$

The acquisition evaluation set contains both malicious and benign files, partially *new* (were not in the training set) and partially *not¬new* (absent from the training set), and thus unknown to the classifier. To evaluate the selective method, the precision and recall measures are defined in the context of the present invention. Corresponding to the evaluation scheme presented in Figure 3, the precision_new_benign is defined in Equation 15 by the proportion among the new benign files which are acquired and the acquired benign files. Similarly the precision_new_malicious is defined in Equation 16. The recall_new_benign is defined in Equation 17 by how many new benign files in the stream were acquired from the entire set of new benign in the stream. The recall_new_malicious is defined similarly in Equation 18.

$$precision\_new\_Benign = \frac{A \cap B \cap N}{A \cap B} \quad (15)$$

$$precision\_new\_Malicious = \frac{A \cap M \cap N}{A \cap M} \quad (16)$$

$$recall\_new\_Benign = \frac{A \cap B \cap N}{N \cap B} \quad (17)$$

$$recall\_new\_Malicious = \frac{A \cap M \cap N}{N \cap M} \quad (18)$$

The acquired examples are important for the incremental improvement of the classifier. The Active Learner acquires the new examples which are mostly important for the improvement of the classifier, but not all the new examples are acquired, especially these which the classifier is certain on their classification. This set of files are the New and not Acquired (N\A), thus, it is possible to measure the accuracy of the classification of these files to make sure that the classifier classified them correctly. Equation 19 defines the accuracy rate for classifications of new examples that are not acquired by the learner, where | TP (N \ A) | is the number of malicious executables that were labeled correctly as malicious, out of the un-acquired new examples.

$$Acc(N \backslash A) = \frac{|TP(N \backslash A)| + |TN(N \backslash A)|}{|TP(N \backslash A)| + |FP(N \backslash A)| + |TN(N \backslash A)| + |FN(N \backslash A)|} \quad (19)$$

In addition the classification accuracy of the classifier in classifying examples which are not acquired, were measured. Thus Equation 20 is the classifications accuracy of the *not-new* examples that are not acquired by the classifier, where |TP¬(N ∪ A) | is the number of malicious executables that are labeled correctly as malicious out of the unacquired not-new examples

$$Accu \neg (N \cup A) = \frac{|TP \neg (N \cup A)| + |TN \neg (N \cup A)|}{|TP \neg (N \cup A)| + |FP \neg (N \cup A)| + |TN \neg (N \cup A)| + |FN \neg (N \cup A)|} \qquad (20)$$

According to yet a further embodiment of the present invention, to determine the best settings of the file representation and the feature selection a wide and comprehensive set of evaluation runs, are performed, including all the combinations of the optional settings for each of the aspects, amounting to 1536 runs in a 5-fold cross validation format for all the three kernels. The files in the test-set are not in the training-set presenting unknown files to the classifier.

### Global Feature Selection vs n-grams

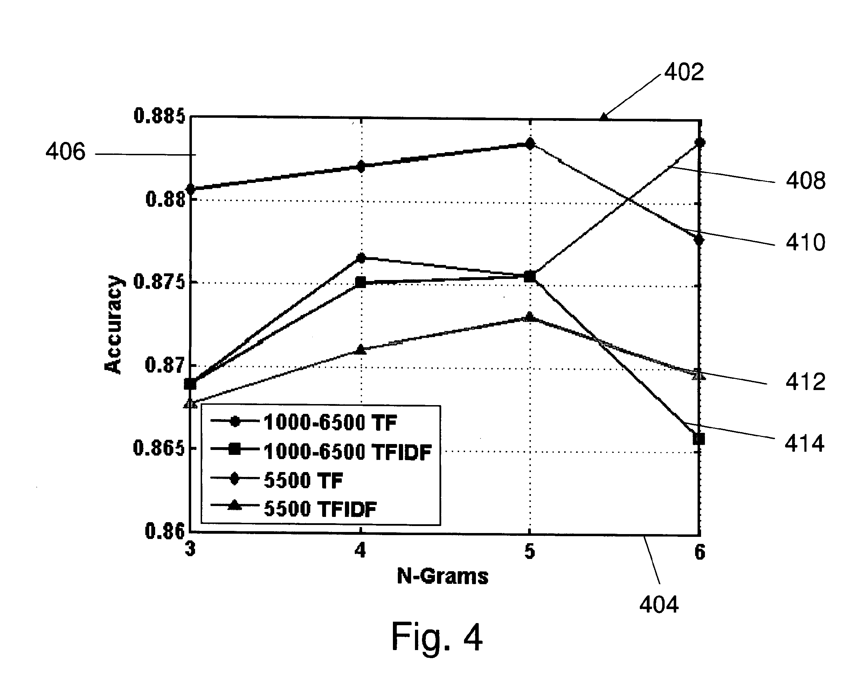

According to an embodiment of the present invention, Fig. 4 presents graphically 402 the mean accuracy of the combinations of the term representations 408, 410, 412, and 414 and n-grams 404. The top 5,500 features outperformed with the TF representation 408 and the 5-gram in general. The out-performing of the TF has meaningful computational advantages, on which we will elaborate in the Discussion. In general, mostly the 5-grams outperformed the others.

### Feature Selections and Top Selections

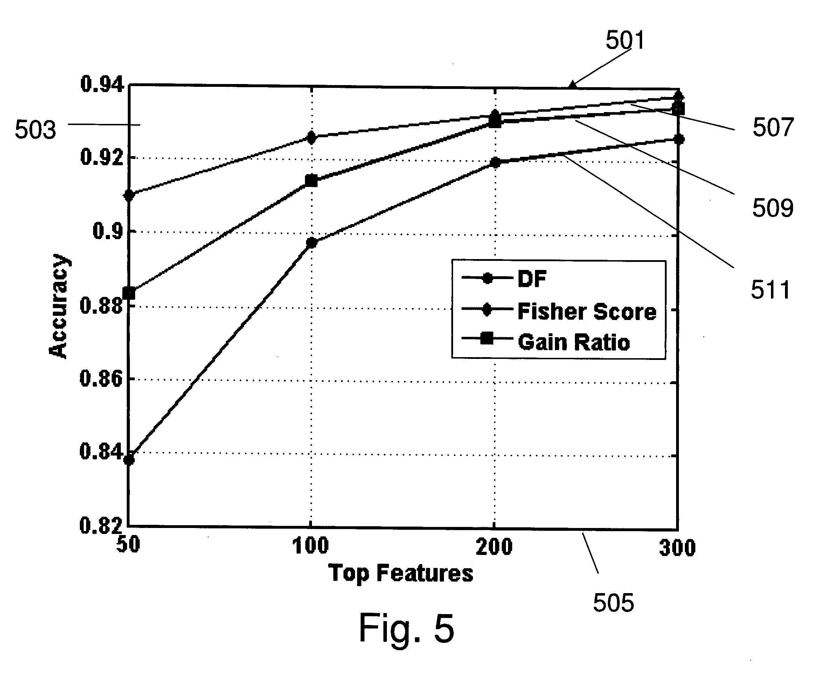

Figure 5 presents graphically 501 the mean accuracy of the three feature selection methods 507, 509, and 511 and the seven top selections. For fewer features, the FS outperforms 507, while above the Top 300 there was not much difference. However, in general the FS outperformed the other methods. For all the three feature selection methods there is a decrease in the accuracy when using above Top 1000 features.

### Classifiers

According to still another embodiment of the present invention, after determining the best configuration of 5-Grams, Global top 5500, TF representation, Fischer score, and Top 300, the results of some SVM kernel tested are presented in Table 3. The RBF kernel out-performed the others and had a low false positive rate, while the other kernels also perform very well.

**Table 3: The RBF kernel outperformed while maintaining a low level of false positive.**

| Classifier | Accuracy | FP | FN |
|---|---|---|---|
| SVM-LIN | 0.921 | 0.033 | 0.214 |
| SVM-POL | 0.852 | 0.014 | 0.544 |
| SVM-RBF | 0.939 | 0.029 | 0.154 |

The second set of experiments relates to two selective sampling Active Learning methods: the Simple Margin presented in "Support vector machine active learning with applications to text classification.", Tong, S., and Koller, D., 2000, Journal of Machine Learning Research, 2:45-66, 2000-2001, and Error Reduction presented in "Toward Optimal Active Learning through Sampling Estimation of Error Reduction", Roy, N., and McCallum, A., 2001, ICML 2001.

The Simple-Margin method is directly oriented to the SVM classifier. As explained previously, by using a kernel function, the SVM implicitly projects the training examples into a different (usually higher dimensional) feature space, denoted by F. In this space there is a set of hypotheses that are consistent with the training-set, meaning that they create linear separation of the training-set. This set of consistent hypotheses is called the *Version-Space (VS).* From among the consistent hypotheses, the SVM then identifies the best hypothesis that has the maximal margin. Thus, the motivation of the Simple-Margin Active Learning method is to select those examples from the pool, so that these will reduce the number of hypotheses in the VS, in an attempt to achieve a situation where VS contains the most accurate and consistent hypotheses. Calculating the VS is complex and impractical when large datasets are considered, and therefore this method is oriented through simple heuristics that are based on the relation between the VS and the SVM with the maximal margin. Practically, examples those lie closest to the separating hyperplane (inside the margin) are more likely to be informative and new to the classifier, and thus will be selected for labeling and acquisition.

The Error Reduction method is more general and can be applied to any classifier that can provide probabilistic values for its classification decision. Based on the estimation of the expected error, which is achieved through adding an example into the training-set with each label, the example that is expected to lead to the minimal expected error is selected and labeled. Since the real future error rates are unknown, the learner utilizes its current classifier in order to estimate those errors. In the beginning of an Active Learning trial, an initial classifier $P_D^{\wedge}(y \mid x)$ is trained over a randomly selected initial set D. For every optional label $y \in Y$ (of every example x in the pool P) the algorithm induces a new classifier $P_{D'}^{\wedge}(y \mid x)$ trained on the extended training set $D' = D + (x, y)$. Thus (in our binary case, malicious and benign are the only optional labels) for every example X there are two classifiers, each one for each label. Then for each one of the example's classifiers the future expected generalization error is estimated using a log-loss function, shown in Equation 8. The log-loss function measures the error degree of the current classifier over all the examples in the pool, where this classifier represents the induced classifier as a result of selecting a specific example from the pool and adding it to the training set, having a specific label. Thus, for every example $x \in P$ we actually have two future generalization errors (one for each optional label as was calculated in Equation 11). Finally, an average is calculated for the two errors, which is called the self-estimated average error, based on Equation 12. It can be understood that it is built of the weighted average so that the weight of each error of example x with label y is given by the prior probability of the initial classifier to classify correctly example x with label y. Finally, the example x with the lowest expected self-estimated error is chosen and added to the training set. In a nutshell, an example will be chosen from the pool only if it dramatically improves the confidence of the current classifier more than all the examples in the pool (means lower estimated error)

$$E_{P_{D'}^{\wedge}} = \frac{1}{|P|} \sum_{x \in P} \sum_{y \in Y} P_{D'}^{\wedge}(y \mid x) \cdot \left| \log( P_{D'}^{\wedge}(y \mid x)) \right| \qquad (11)$$

$$\sum_{y \in Y} P_D^{\wedge}(y \mid x) \cdot E_{P_{D'}^{\wedge}} \qquad (12)$$

According to one another embodiment of the present invention, based on the previous results, and an imbalanced representation of malicious-benign proportions in the test-set to reflect real life conditions of 10% malicious files in the stream, a classification experiment applying only the SVM-RBF kernel was realized. Said real life conditions of 10% malicious files are defined in "Unknown Malcode Detection via Text Categorization and the Imbalance Problem", Moskovitch, R., Stopel, D., Feher, C., Nissim, N., and Elovici., Y, 2008, IEEE Intelligence and Security Informatics, Taiwan 2008.

The evaluation test collection included several components: *Training-Set, Acquisition-Set (Stream),* and *Test-set.* The Acquisition-set consisted of benign and malicious examples, including known executables (that appeared in the training set) and unknown executables (which did not appear in the training set) and the *Test-set* included the entire Data-set.

These sets were used in the following steps of the experiment:

1. A *Learner* is trained on the *Training-Set,*
2. The *model* is tested on the *Test-Set* to measure the initial accuracy,
3. A *stream of files* is introduced to the Active Learner, which asks selectively for labeling of specific files, which are acquired,
4. After acquiring all the new informative examples, the *Learner* is trained on the new *Training-Set,*
5. The *Learner* is tested on the Test-Set.

According to yet a further embodiment of the present invention, the learners are applied in each step using two different variation of cross validation for each Active Learning method. For the Simple- Margin, variation of 10 folds cross validation are used. Thus, the Acquisition Set (stream) contained part of the folds in the Training Set and the Test Set, which is used for evaluation prior to the Acquisition phase and after, contained all the folds.

The Simple Margin Active Learner is applied in the experimental setup presented earlier. Table 4 presents the mean results of the cross validation experiment. Both the Benign and the Malicious Precision are very high, above 99%, which means that most of the acquired files were indeed new. The Recall measures are quite low, especially the Benign Recall. This can be explained by the need of the Active Learner to improve the accuracy. An interesting fact is the difference in the Recall of the Malicious and the Benign, which can be explained by the varying proportions in the training set, which was 10% malicious.

The classification accuracy of the new examples that are not acquired is very high as well, being close to 99%, which is also the classification accuracy of the not new, which was 100%. However, the improvement between the Initial and Final accuracy was significant, which shows the importance and the efficiency in the acquisition process.

**Table 4: The Simple-Margin acquisition performance.**

| Measure | Simple Margin Performance |
|---|---|
| Precision Benign | **99.81**% |
| Precision Malicious | **99.22%** |
| Recall Benign | 33.63% |
| Recall Malicious | 82.82% |
| *Accuracy ($N \setminus A$)* | **98.90%** |
| *Accuracy $\neg(N \cup A)$* | 100% |
| Initial Accuracy on Test-Set | 86.63% |
| Final Accuracy on Test-Set | **92.13%** |
| Number Examples in Stream | 10250 |
| Number of New Examples | **7750** |
| Number Examples Acquired | **2931** |

According to still one embodiment of the present invention, the evaluation is performed using the Error Reduction method. Table 5 presents the mean results of the cross validation experiment. In the acquisition phase, the Benign Precision is high, while the Malicious Precision is relatively low, which means that almost 30% of the examples that are acquired were not actually new. The Recall measures are similar to those for the Simple-Margin, in which the Benign Recall is significantly lower than the Malicious Recall. The classification accuracy of the not acquired files is high both for the new and for the not new examples.

**Table 5: The Error-reduction acquisition performance.**

| Measure | Error Reduction Performance |
|---|---|
| Precision Benign | **97.563%** |
| Precision Malicious | **72.617%** |
| Recall Benign | 29.050% |
| Recall Malicious | 75.676% |
| *Accuracy ($N \setminus A$)* | **98.316%** |
| *Accuracy $\neg(N \cup A)$* | 100% |
| Initial Accuracy on Test-Set | 85.803% |
| Final Accuracy on Test-Set | **89.045%** |
| Number Examples in Stream | 3010 |
| Number of New Examples | **2016** |
| Number Examples Acquired | **761** |

Most of the classifiers behaved optimally when the MFP levels in the training-set and test-set are similar, except for NB and BDT, which show low performance levels earlier. This indicates that when configuring a classifier for a real-life application, the MFP in the training-set has to be set accordingly.

The present invention allows the detection of unknown malicious code. It is firstly based on concepts from IR and more specifically Text Categorization.

In the malcode detection problem, binary files (which could be executables) are parsed and n-gram terms are extracted. Each n-gram term in the malcode detection problem is analogous to words in the textual domain. Secondly it is based on the Active Learning approach. The goal of the present invention is allowing reducing the human expert work to define malicious files.

According to another embodiment of the present invention, the implementation of the current method can be used anywhere on a network to allow detection of unknown malicious code and to reduce the risk of dissemination of malicious files.

According to once another embodiment of the present invention, said invention proposes a method allowing detecting malicious files from a stream of a high number of files after a learning process based on a real life ratio between malcode and benign files.

Although embodiments of the invention have been described by way of illustration, it will be understood that the invention may be carried out with many variations, modifications, and adaptations, without exceeding the scope of the claims.

## Claims

1. A method for efficiently detecting unknown malicious code:

    a) creating a Data Set being a collection of files that includes a first subset with malicious code and a second subset with benign code files;
    b) identifying malicious and benign files by an antivirus program;
    c) parsing all files using n-gram moving windows of several lengths;
    d) for each n-gram in each file, computing the TF representation;
    e) selecting an initial set of top features of all n-grams, based on the DF measure;
    f) reducing the number of the top features to comply with the computation resources required for classifier training, by using features selection methods;
    g) determining the optimal number of features based on the evaluation of the detection accuracy of several sets of reduced top features;
    h) preparing a dataset with a distribution of benign files is greater than the distribution of malicious files, where a portion of said dataset is used for training the classifier,; and
    i) automatically detecting and acquiring new malicious codes within a stream of new files by using Active Learning.

2. A method according to claim 1, further comprising:

    j) for each classifier with a specific type of kernel:

        j.1) evaluating the classification accuracy using the simple-margin acquisition method for the active learning step; and
        j.2) improving the previous results using error-reduction algorithms to evaluate acquisition performance.

    k) selecting the optimal kernel, to be used with the classifier, to thereby obtain results with the highest detection accuracy,

    wherein the remaining portion of said dataset is used as a test set.

3. A method according to claim 1, wherein the distribution of benign and files malicious files equal to 90%-10%, respectively.

4. A method according to claim 1, wherein the malicious code is a malicious executable.

5. A method according to claim 1, wherein the classifier is an SVM classifier.

6. A method according to claim 1, wherein the remaining portion is used as a test set.

Fig. 1

EP 2 182 458 A1

206

208

204

202

qwertyaz
erty12332
1abcde12

| q | w | e |
| w | e | r |
| e | r | t |
| r | t | y |
| t | y | a |
| y | a | z |
| a | z | e |
| z | e | r |
| e | r | t |
| r | t | y |
| t | y | 1 |
| y | 1 | 2 |
| 1 | 2 | 3 |
| 2 | 3 | 3 |
| 3 | 3 | 2 |
| 3 | 2 | 1 |
| 2 | 1 | a |
| 1 | a | b |
| a | b | c |
| b | c | d |
| c | d | e |
| d | e | 1 |
| e | 1 | 2 |

Class (+1)

W

margin

Class(-1)

101

Malicious file

210

Benign file

212

Mc

Bc

Fig. 2

Fig. 3

Fig. 4

Fig. 5

Europäisches
Patentamt

European
Patent Office

Office européen
des brevets

# EUROPEAN SEARCH REPORT

Application Number

EP 09 01 2448

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | ROBERT MOSKOVITCH ET AL: "Acquisition of Malicious Code Using Active Learning" INTERNET CITATION 1 January 2008 (2008-01-01), XP007911444 Retrieved from the Internet: URL:http://medinfo.ise.bgu.ac.il/medLab/MembersHomePages/RobPapers/Moskovitch.UnknwonMalcodeAcquisitionAL.PinKDD08.pdf> [retrieved on 2010-02-02] * the whole document * | 1-6 | INV. G06F21/00 |
| A | US 2006/037080 A1 (MALOOF MARCUS A [US]) 16 February 2006 (2006-02-16) * claims 1-17 * | 1-6 | |
| A | BOYUN ZHANG ET AL: "New Malicious Code Detection Based on N-gram Analysis and Rough Set Theory" COMPUTATIONAL INTELLIGENCE AND SECURITY, 2006 INTERNATIONAL CONFERENCE ON, IEEE, PI, 1 November 2006 (2006-11-01), pages 1229-1232, XP031013004 ISBN: 978-1-4244-0604-3 * the whole document * | 1-6 | |
| A | ROBERT MOSKOVITCH ET AL: "Improving the Detection of Unknown Computer Worms Activity Using Active Learning" 10 September 2007 (2007-09-10), KI 2007: ADVANCES IN ARTIFICIAL INTELLIGENCE; [LECTURE NOTES IN COMPUTER SCIENCE], SPRINGER BERLIN HEIDELBERG, BERLIN, HEIDELBERG, PAGE(S) 489 - 493 , XP019099086 ISBN: 9783540745648 * the whole document * | 1-6 | |

TECHNICAL FIELDS
SEARCHED    (IPC)

G06F

-/--

The present search report has been drawn up for all claims

| Place of search | Date of completion of the search | Examiner |
|---|---|---|
| Munich | 8 February 2010 | Widera, Sabine |

CATEGORY OF CITED DOCUMENTS

X : particularly relevant if taken alone
Y : particularly relevant if combined with another
   document of the same category
A : technological background
O : non-written disclosure
P : intermediate document

T : theory or principle underlying the invention
E : earlier patent document, but published on, or
   after the filing date
D : document cited in the application
L : document cited for other reasons

& : member of the same patent family, corresponding
   document

EPO FORM 1503 03.82 (P04C01)

Europäisches
Patentamt

European
Patent Office

Office européen
des brevets

# EUROPEAN SEARCH REPORT

Application Number

EP 09 01 2448

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | ZICO KOLTER J ET AL: "Learning to detect and classify malicious executables in the wild" JOURNAL OF MACHINE LEARNING RESEARCH, MIT PRESS, CAMBRIDGE, MA, US, vol. 7, 1 December 2006 (2006-12-01), pages 2721-2744, XP007909930 ISSN: 1532-4435 * abstract * | 1-6 | |

-----

TECHNICAL FIELDS
SEARCHED      (IPC)

The present search report has been drawn up for all claims

| Place of search | Date of completion of the search | Examiner |
|---|---|---|
| Munich | 8 February 2010 | Widera, Sabine |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

     .........................................................................................

& : member of the same patent family, corresponding
    document

**ANNEX TO THE EUROPEAN SEARCH REPORT
ON EUROPEAN PATENT APPLICATION NO.**

EP 09 01 2448

This annex lists the patent family members relating to the patent documents cited in the above-mentioned European search report.
The members are as contained in the European Patent Office EDP file on
The European Patent Office is in no way liable for these particulars which are merely given for the purpose of information.

08-02-2010

| Patent document cited in search report | Publication date | Patent family member(s) | Publication date |
|---|---|---|---|
| US 2006037080 A1 | 16-02-2006 | NONE | |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **Angluin, D.** Queries and concept learning. *Machine Learning,* 1988, vol. 2, 319-342
- A sequential algorithm for training text classifiers. **Lewis, D. ; Gale, W.** Proceedings of the Seventeenth Annual International ACM-SIGIR Conference on Research and Development in Information Retrieval. Springer-Verlag, 1994, 3-12
- **Frawley W. ; Piatetsky-Shapiro G. ; Matheus C.** Knowledge Discovery in Databases - An Overview. *Knowledge Discovery in Databases,* 1991
- **Hand D. ; Mannila H. ; Smyth P.** Principles of Data Mining. MIT Press, 2001
- **Quinlan, J.R.** C4.5: programs for machine learning. Morgan Kaufmann Publishers, 1993
- **Witten, I. H. ; Frank, E.** Data Mining: Practical Machine Learning Tools and Techniques. Elsevier, 2005
- **Gryaznov, D.** Scanners of the Year 2000: Heuristics. *Proceedings of the 5th International Virus Bulletin,* 1999
- **Domingos P. ; Pazzani M.** On the optimality of simple Bayesian classifier under zero-one loss. *Machine Learning,* 1997, vol. 29
- Making large-scale support vector machine learning practical. **Joachims, T.** Advances in Kernel Methods: Support Vector Machines. MIT Press, 1998
- **Burges, CJC.** A tutorial on support vector machines for pattern recognition. *Data Mining and Knowledge Discovery,* 1988, vol. 2, 121-167
- **Lane, F.** *McAfee Study Finds 4 Percent of Search Results Malicious,* 04 June 2007, http:llwww.newsfactor.com/story.xhtml?story_id=010000CEUEQO
- **Shin, J. ; Jung, H.** Balakrishnan, Malware Prevalence in the KaZaA File-Sharing Network. *Internet Measurement Conference,* October 2006
- **Shultz et al.** Data mining methods for detection of new malicious Executables. *Proceedings of the IEEE Symposium on Security and Privacy,* 2001
- **Abou-Assaleh, T. ; Cercone, N. ; Keselj, V. ; Sweidan, R.** N-gram Based Detection of New Malicious Code. *Proceedings of the 28th Annual International Computer Software and Applications Conference,* 2004

- **Kolter, J.Z. ; Maloof, M.A.** Proceedings of the Tenth ACM SIGKDD International Conference on Knowledge Discovery and Data Mining. ACM Press, 2004, 470-478
- **Mitchell T.** Machine Learning. McGraw-Hill, 1997
- **Kolter J. ; Maloof M.** Learning to Detect and Classify Malicious Executables in the Wild. *Journal of Machine Learning Research,* 2006, vol. 7
- **Henchiri, O. ; Japkowicz, N.** A Feature Selection and Evaluation Scheme for Computer Virus Detection. *Proceedings of ICDM-2006,* 2006
- **Schultz, M. ; Eskin, E. ; Zadok, E. ; Stolfo, S.** Data mining methods for detection of new malicious executables. *Proceedings of the IEEE Symposium on Security and Privacy,* 2001, 178-184
- **Moskovitch, R. ; Stopel, D. ; Feher, C. ; Nissim, N. ; Elovici, Y.** Unknown Malcode Detection via Text Categorization and the Imbalance Problem. *2008 IEEE Intelligence and Security Informatics,* 2008
- **Tong, S. ; Koller, D.** Support vector machine active learning with applications to text classification. *2000, Journal of Machine Learning Research,* 2000, vol. 2, 45-66
- **Salton, G. et al.** A vector space model for automatic indexing. *Communications of the ACM,* 1975, vol. 18
- **Glob, T. ; Slonim, D. ; Tamaya, P. ; Huard, C. ; Gaasenbeek, M. ; Mesirov, J. ; Coller, H. ; Loh, M. ; Downing, J. ; Caligiuri, M.** Molecular classification of cancer: Class discovery and class prediction by gene expression monitoring. *Science,* 1999, vol. 286, 531-537
- **Tong, S. ; Koller, D.** Support vector machine active learning with applications to text classification. *Journal of Machine Learning Research,* 2000, vol. 2, 45-66
- **Roy, N. ; McCallum, A.** Toward Optimal Active Learning through Sampling Estimation of Error Reduction. *ICML 2001,* 2001
- **Moskovitch, R. ; Stopel, D. ; Feher, C. ; Nissim, N. ; Elovici., Y.** Unknown Malcode Detection via Text Categorization and the Imbalance Problem. *IEEE Intelligence and Security Informatics,* 2008